# EUROPEAN PATENT SPECIFICATION

(11) **EP 1 008 290 B1**
(45) Date of publication and mention of the grant of the patent: **18.02.2004**
(21) Application number: 99610069.9
(22) Date of filing: 15.11.1999
(51) Int. Cl.: A01D 43/10

(54) **Mower with crop discharge guiding means**
Mäher mit einer Leitvorrichtung im Förderfluss
Faucheuse avec moyens de guidage de décharge

(30) Priority: 16.11.1998 DK 149198
(43) Date of publication of application: 14.06.2000
(73) Proprietor: JF-FABRIKEN - J. FREUDENDAHL A/S, DK-6400 Sonderborg (DK)
(72) Inventor: Nielsen, Harald Raun, Höruphav, 6470 Sydals (DK)
(74) Representative: Jorgensen, Bjorn Barker

(56) References cited:
- EP-A- 0 212 184
- EP-A- 0 558 436
- DE-A- 2 231 624
- DE-A- 2 712 645
- DE-A- 3 142 594
- US-A- 3 543 491
- US-A- 3 721 073

## Description

The present invention relates to a mower comprising mowing means, throwing means for ejecting backwards material mowed by the mowing means along a throw path, and a guiding or covering shield above and rearwards of the throwing means, in which, behind the throwing means, a row of substantially vertical, backwards directed guide plates extending in the throw path is provided. Guide plates of this type are used in mowers if, for reasons of drying, it is desirable to spread the mowed material across the field instead of collecting it in a windrow.

A mover of this type is disclosed in DE-A-31 42 594, in which the guide plates are mounted in a separate, interchangeable end member for the covering shield. An alternative end member is provided with a guide plate pivotal about a horizontal, transverse axis, by means of which guide plate thrown, mowed material may be guided down on the ground for the formation of a shaped windrow. It is thus necessary when changing from an operating condition, in which the mowed material is spread widely, to an operating condition, in which the mowed material is placed in a windrow, to exchange the end member.

DE-A-2 231 624 discloses a mower comprising mowing means, conditioning and throwing rolls ejecting material cut my the mowing means backwards and a cover plate hinged to the rear of a mower frame. Lateral guide plates are suspended in the cover plate. The lateral guide plates are hinged by their respective front edge for pivotal adjustment around vertical axes to adjust the density of a swath gathered and formed by the guide plates. The cover plate may together with the lateral guide plates be swung upwards into an inactive position.

The object of the invention is to provide a mower, in which said exchange is made more easily.

This object is met by a mower which is characterized in that the guide plates are mounted on a transverse plate which is pivotal about an axis in order to bring the guide plates into and out of the throw path. In a preferred embodiment the axis extends transversely to the throw path.

This makes it possible to provide the transverse plate with a backside which, when the guide plates are swung out of the throw path, may serve as a guide plate for guiding the ejected material towards the ground.

The invention will be explained in detail in the following by means of an example of an embodiment with reference to the schematic drawing, in which
Fig. 1 shows a vertical longitudinal sectional view through a known mower with a transverse plate for guiding thrown material towards the ground,
Fig. 2 a view of a mower corresponding to the one shown in Fig. 1, but provided with guide plates according to the invention,
Fig. 3 a sectional view along the line III-III in Fig. 2,
Fig. 4 a sectional view corresponding to Fig. 3, but with the transverse plate in another position, and
Figs 5 and 6 illustrate a possible variant of the invention.

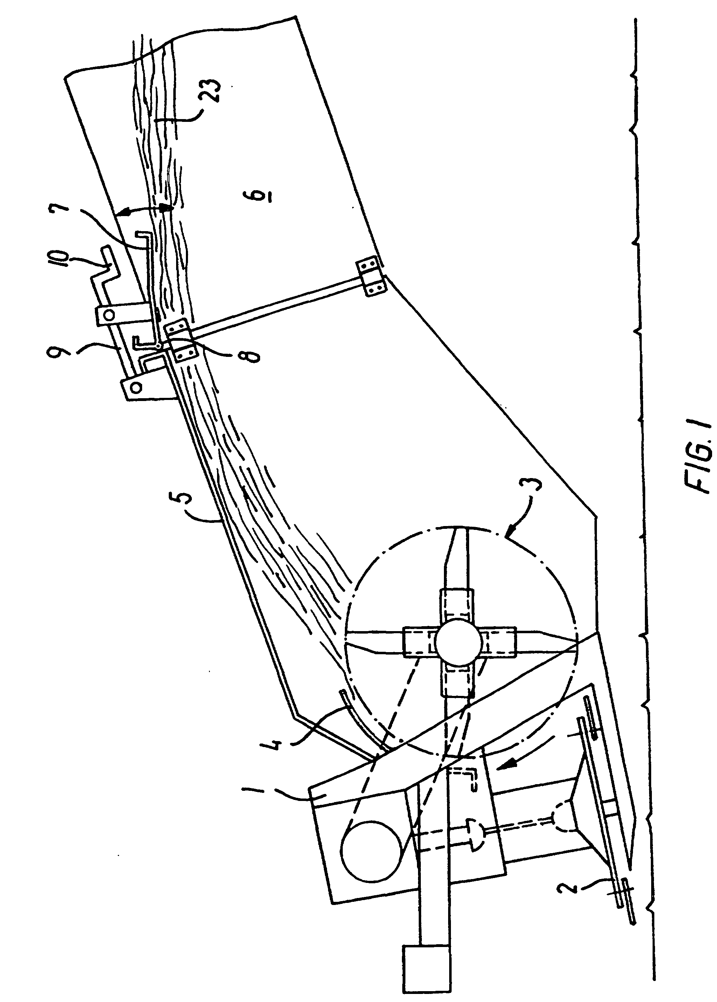

Fig. 1 shows a lift-suspended mower known from Applicant's own EP-A-0 524 130, said mower comprising a carrier frame 1, mowing means in the form of cutter discs 2, throwing means in the form of a combined conditioning and throwing rotor 3, a crimper plate 4 for keeping the mowed material 23 in engagement with the conditioning and throwing rotor 3 during operation and a covering and guiding shield 5. This known mower comprises moreover vertical, pivotal windrow shields 6 for providing an ejection opening which is adjustable relative to the mowing width, and a transverse plate 7 which is hinged about a substantially horizontal axis 8 and which may be tilted by means of a spindle 9 with a handle 10 into a position, in which, to a desired degree, the mowed material 23 ejected from the conditioning and throwing rotor 3 is guided towards the ground.

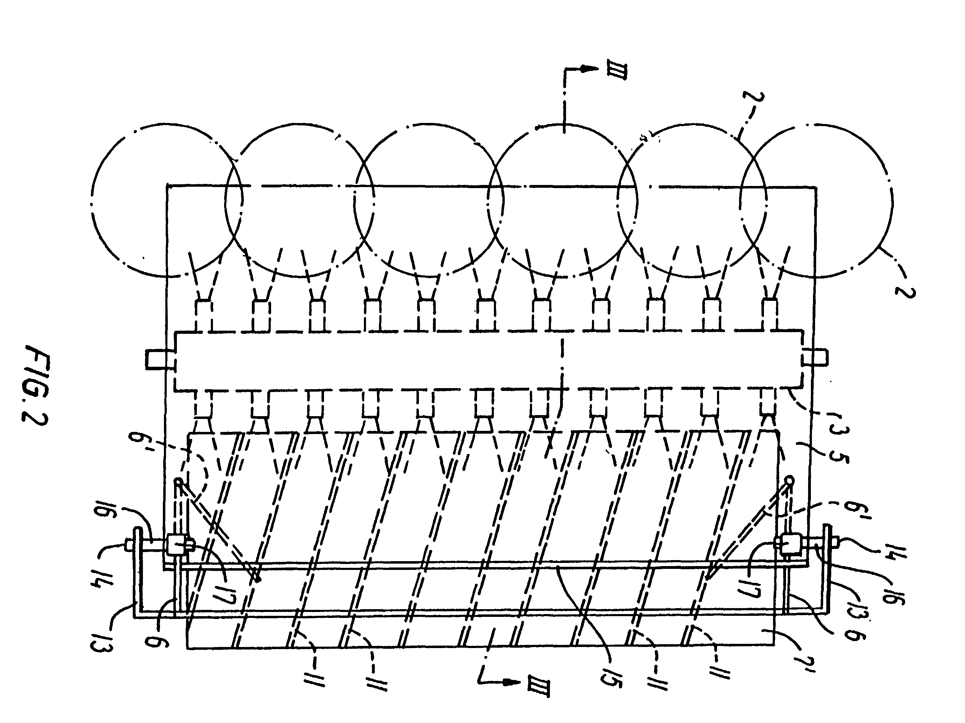

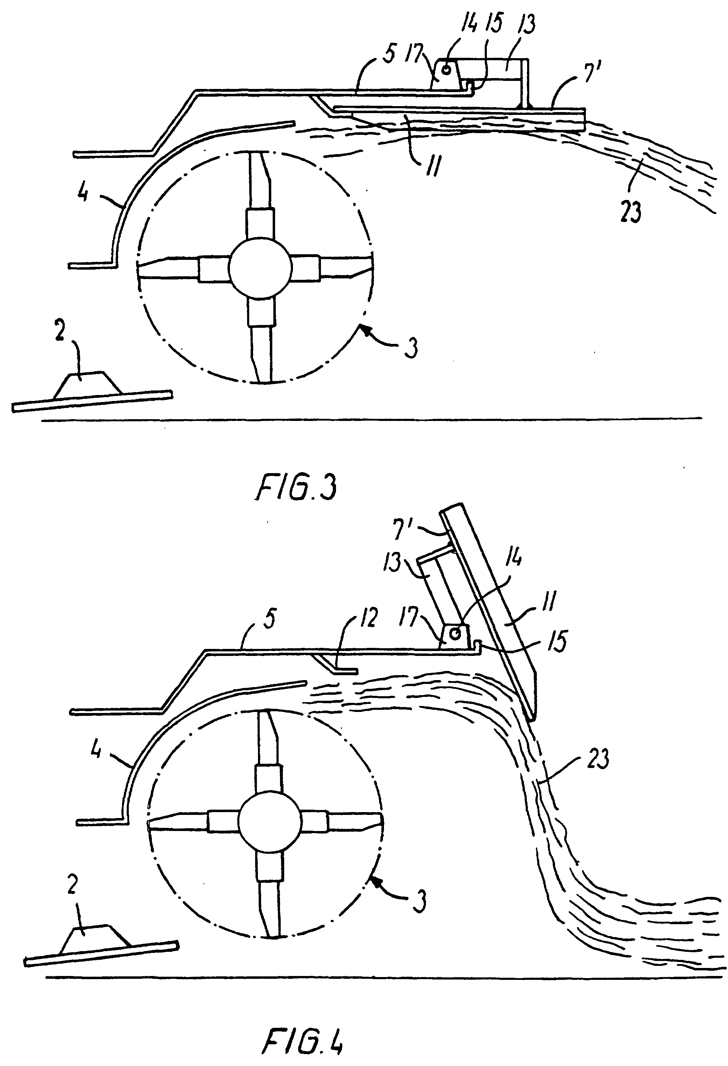

Generally, the mower shown in Figs 2-4 also comprises components mentioned in connection with Fig. 1, but the transverse plate 7' is on one side provided with a row of guide plates 11, which in the example are mutually parallel, and which, when the transverse plate 7' takes up the position shown in Fig. 3, extend down into the throw path of the ejected mowed material 23 in order to ensure a wide spreading across the field.

Fig. 2 shows the windrow shields 6 with fully drawn lines to the extent, to which they protrude under the covering shield 5 in a position, in which they extend straight backwards in order not to be in the way of the guide plates 11, when they extend down into the path of the ejected mowed material. When the guide plates 11 are swung out of this path, the windrow shields may be swung to the position indicated by 6' to provide a limited ejection opening.

A fixed guide plate 12 under the covering shield 5 prevents the thrown material 23 from penetrating up behind the transverse plate 7', when it takes up the position shown in Fig. 3.

The transverse plate 7' may be swung around to the position shown in Fig. 4 to guide the ejected mowed material 23 towards the ground, as it is known from the mower shown in Fig. 1.

In the embodiment shown the transverse plate 7' is hinged through a bracket 13 such that the hinge points 14 relative to the transverse plate 7 are placed outside the plane of the plate and relative to the covering shields 5 above and somewhat away from its rear edge 15, the hinge pins 16 being mounted in blocks 17.

The guide plates 11 extend in a fixed position slightly obliquely relative to the transverse plane and thus the throw direction of the conditioning and throwing rotor 3 to prevent ejected mowed material from being thrown into crop not yet mowed during operation.

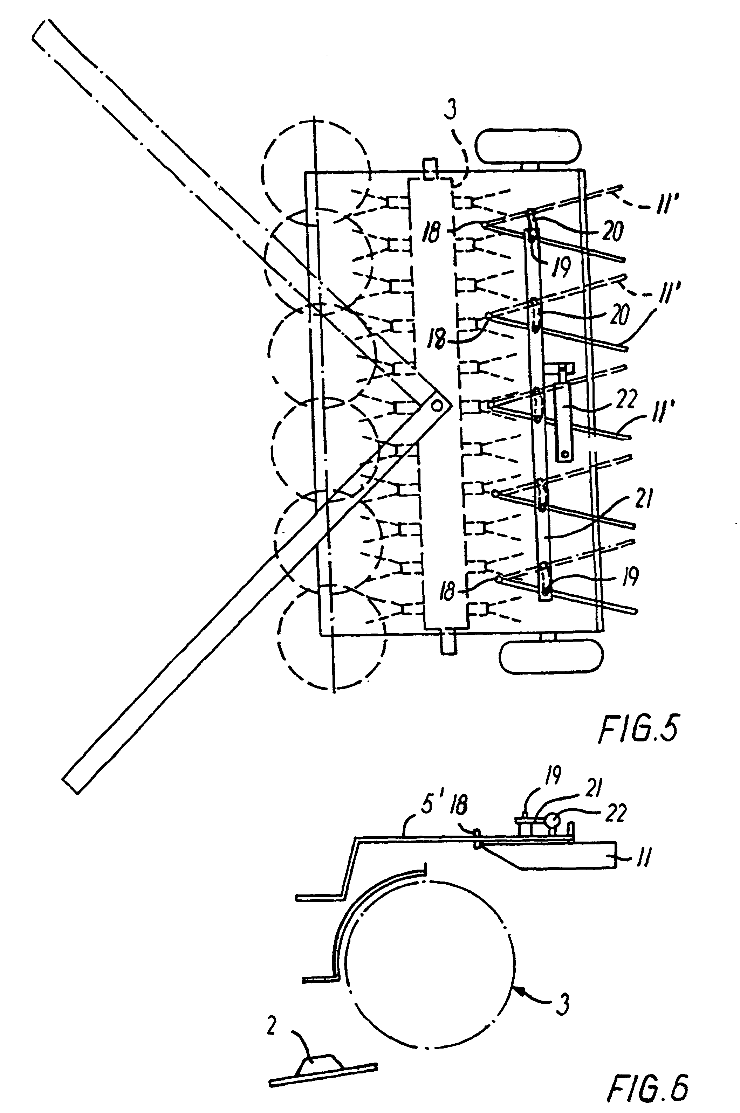

Instead of the fixed oblique position it is possible to design the transverse plate 7' with the guide plates 11 in such a manner that the latter are adjustable between two positions, in which they are oblique to one side and the other side, respectively. This is obtained by means of the mechanism shown in Figs 5-6, said mechanism being the subject of an application filed on the same date and by the same Applicant as the present application. Only should the guide plates 11 preferably be hinged at their rear edge instead of at their front edge as shown in Figs 5-6.

Figs 5 and 6 show a towed mover, seen from above and in a sectional view along the line VI-VI in Fig. 5, respectively, in which mower on the underside of the covering shield 5 guide plates 11' are provided which during operation extend down into the flow of ejected mowed material. The guide plates 11' are each hinged by a vertical hinge pin 18 in such a manner that they are swingable in a horizontal plane between two positions, one of which is shown in Fig. 5 in solid line and the other one shown in dot-and-dash line. The guide plates 11' are each provided with a pin 19 extending through a slot 20 in the covering shield 5' and up into a hole in a guide rod 21 placed above the shield 5'. The guide rod is movable in its longitudinal direction by means of a hydraulic cylinder 22, whereby the guide plates 11' are moved between their two positions shown.

It should be noted that the mower shown in Figs 2-4 may be a towed or a lift-suspended mower.

## Claims

1. A mower comprising mowing means (2), throwing means (3) for ejecting backwards material (23) mowed by the mowing means (2) along a throw path, and a guiding or covering shield (5) above and rearwards of the throwing means (3), in which, behind the throwing means (3), a row of substantially vertical, backwards directed guide plates (11) extending in the throw path is provided, **characterized in that** the guide plates (11) are mounted on a transverse plate (7') which is pivotal about an axis (16) to bring the guide plates (11) into and out of the throw path.

2. A mower according to claim 1, **characterized in that** the axis (16) extends transversely to the throw path.

3. A mower according to claims 1 or 2, **characterized in that** the transverse plate (7') has a backside which, when the guide plates (11) are swung out of the throw path, may serve as a guide plate for guiding the ejected material (23) towards the ground.

## Patentansprüche

1. Mäher umfassend Mähwerkzeuge (2), Wurforgane (3) zum Schleudern des von den Mähwerkzeugen gemähten Materials (23) rückwärts entlang einer Wurfbahn, sowie ein über und hinter den Mähwerkzeugen (3) angeordnetes Leit- oder Deckblech (5), wobei hinter den Wurforganen (3) eine Reihe von im wesentlichen senkrechten, nach hinten gerichteten, in der Wurfbahn verlaufenden Führungsplatten (11) angeordnet sind, **dadurch gekennzeichnet, dass** die Führungsplatten (11) auf einer Querplatte (7') montiert sind, welche um eine Achse (16) drehbar ist, um die Führungsplatten (11) in die Wurfbahn und aus dieser heraus zu bringen.

2. Mäher nach Anspruch 1, **dadurch gekennzeichnet, dass** die Achse (16) quer zur Wurfbahn verläuft.

3. Mäher nach Anspruch 1 oder 2, **dadurch gekennzeichnet, dass** die Querplatte (7') eine Rückseite aufweist, welche, wenn die Führungsplatten (11) aus der Wurfbahn herausgeschwenkt sind, als Führungsplatte zum Leiten des ausgeworfenen Materials (23) zum Erdboden hin dient.

## Revendications

1. Faucheuse comprenant des moyens de fauchage (2), des moyens de lancement (3) pour éjecter vers l'arrière du matériau (23) fauché par les moyens de fauchage (2) le long d'un chemin de lancement, et un écran de guidage ou de couverture (5) situé au-dessus et à l'arrière des moyens de lancement (3), dans laquelle, derrière les moyens de lancement (3), est pourvue une rangée de plaques de guidage (11) essentiellement verticales, orientées vers l'arrière et s'étendant dans le chemin de lancement, **caractérisée en ce que** les plaques de guidage (11) sont montées sur une plaque transversale (7') qui peut pivoter autour d'un axe (16) pour faire les plaques de guidage (11) entrer dans et sortir du chemin de lancement.

2. Faucheuse selon la revendication 1, **caractérisée en ce que** l'axe (16) s'étend transversalement au chemin de lancement.

3. Faucheuse selon la revendication 1 ou 2, **caractérisée en ce que** la plaque transversale (7') présente un dos qui, lorsque les plaques de guidage (11) sont tournées en dehors du chemin de lancement, peut servir d'une plaque de guidage pour guider le matériau éjecté (23) vers le sol.
